# FASCICULE DE BREVET EUROPEEN

(11) **EP 2 370 271 B1**
(45) Date de publication et mention de la délivrance du brevet: **11.06.2014**
(21) Numéro de dépôt: 09759670.4
(22) Date de dépôt: 16.11.2009
(51) Int. Cl.: B60C 11/14, C08K 7/00, C08L 7/00, C08L 9/06, B60C 1/00, C08K 3/04, C08K 3/34

(54) **BANDAGE PNEUMATIQUE DONT LA ZONE SOMMET EST POURVUE D'UNE COUCHE BARRIERE A EAU**
LUFTREIFEN MIT EINEM EINE WASSERSPERRSCHICHT AUFWEISENDEN OBEREN BEREICH
PNEUMATIC TYRE HAVING A TOP AREA WITH A WATER BARRIER LAYER

(30) Priorité: 27.11.2008 FR 0858051
(43) Date de publication de la demande: 05.10.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: PAGANO, Salvatore, Tokyo 102-8176 (JP); WAKAMATSU, Naoko, JP-326-0824 Tochigi (JP)
(74) Mandataire: Ribière, Joel
(86) Numéro de dépôt international: PCT/EP2009/008131
(87) Numéro de publication internationale: WO 2010/060550

(56) Documents cités:
- EP-A- 1 564 241
- WO-A-2005/118695
- WO-A-2007/062671
- US-A1- 2003 036 599
- US-A1- 2006 229 404
- US-A1- 2007 006 953

## Description

L'invention est relative aux pneumatiques pour véhicules automobiles ainsi qu'aux compositions caoutchouteuses utilisables pour la fabrication de tels pneumatiques.

Elle est plus particulièrement relative aux compositions caoutchouteuses utilisées dans le sommet ("crown") des pneumatiques à armature de carcasse radiale, ainsi qu'à la protection des armatures de renforcement du sommet encore appelées ceintures ("*bells*") de ces pneumatiques.

Un pneumatique à armature de carcasse radiale, de manière connue, comporte une bande de roulement, deux bourrelets inextensibles, deux flancs reliant les bourrelets à la bande de roulement et une ceinture disposée circonférentiellement entre l'armature de carcasse et la bande de roulement, cette ceinture étant constituée de diverses nappes (ou "couches") de caoutchouc renforcées ou non par des éléments de renforcement ("renforts") tels que des câblés ou des monofilaments, du type métalliques ou textiles.

Plus précisément, une ceinture de pneumatique est généralement constituée d'au moins deux nappes de ceinture superposées, dites parfois nappes "de travail" ou nappes "croisées", dont les renforts sont disposés pratiquement parallèles les uns aux autres à l'intérieur d'une nappe, mais croisés d'une nappe à l'autre, c'est-à-dire inclinés, symétriquement ou non, par rapport au plan circonférentiel médian, d'un angle qui est généralement compris entre 10° et 45° selon le type de pneu considéré. Chacune de ces deux nappes croisées est constituée d'une matrice de caoutchouc ou "gomme de calandrage" enrobant les renforts. Dans la ceinture, les nappes croisées peuvent être complétées par diverses autres nappes ou couches de caoutchouc auxiliaires, de largeurs variables selon les cas, comportant ou non des renforts ; on citera à titre d'exemple de simples coussins de gomme, des nappes dites "de protection" chargées de protéger le reste de la ceinture des agressions externes, des perforations, ou encore des nappes dites "de frettage" comportant des renforts orientés sensiblement selon la direction circonférentielle (nappes dites "à zéro degré"), qu'elles soient radialement externes ou internes par rapport aux nappes croisées.

Pour le renforcement des ceintures ci-dessus, en particulier de leurs nappes croisées, on utilise généralement des câbles d'acier *("steel cords*") constitués de fils fins assemblés entre eux par câblage ou retordage.

Pour remplir efficacement leur fonction de renforcement des ceintures de pneumatiques radiaux, soumises comme on le sait à des contraintes très importantes lors du roulage des pneumatiques, les câbles d'acier doivent satisfaire à un très grand nombre de critères techniques, parfois contradictoires, tels qu'une haute endurance en compression, une résistance élevée à la traction, à l'usure et à la corrosion, une forte adhésion au caoutchouc environnant, et être capables de maintenir ces performances à un niveau très élevé aussi longtemps que possible.

Or, il est connu que des agents corrosifs tels que l'eau, susceptibles de pénétrer dans les pneumatiques notamment à la suite de coupures ou autres agressions de leur sommet, peuvent cheminer jusqu'à la ceinture. La présence d'humidité dans la ceinture, qui plus est sous des conditions de températures relativement élevées, risque de provoquer de la corrosion et d'accélérer les processus de fatigue (phénomènes dits de "fatigue-corrosion"), tout en pénalisant l'adhésion entre les câbles d'acier et la composition de caoutchouc avoisinante, jouant finalement un rôle majeur dans la pérennité des performances des pneumatiques.

Or, les Demanderesses ont découvert lors de leurs recherches une composition de caoutchouc spécifique qui possède d'excellentes propriétés de barrière à eau et qui est ainsi susceptible de conférer une protection améliorée à la ceinture des pneumatiques.

En conséquence, un premier objet de l'invention concerne un pneumatique radial pour véhicule automobile, comportant
o un sommet surmonté d'une bande de roulement pourvue d'au moins une partie radialement externe destinée à entrer au contact de la route ;
o deux bourrelets, deux flancs reliant les bourrelets à la bande de roulement, une armature de carcasse passant dans les deux flancs et ancrée dans les bourrelets ;
o le sommet étant renforcé par une armature de sommet ou ceinture disposée circonférentiellement entre l'armature de carcasse et la bande de roulement ;
o une couche élastomère radialement interne dite « sous-couche », de formulation différente de la formulation de la couche élastomère radialement externe, cette sous-couche étant disposée entre la couche radialement externe de la bande de roulement et la ceinture,
et étant caractérisé en ce que ladite sous-couche comporte au moins 50 à 100 pce d'un copolymère à base de styrène et de butadiène, une charge renforçante, et entre 10 et 150 pce d'une charge lamellaire.

Selon un premier mode préférentiel de l'invention, cette sous-couche élastomère de protection est interne à la bande de roulement, constituant la partie appelée communément « base » d'une bande de roulement à structure dite "cap-base". Dans ce cas, la sous-couche ou base est bien entendu une partie non sculptée c'est-à-dire non destinée à entrer au contact de la route lors du roulage du pneumatique, contrairement à la partie radialement externe destinée à destinée à entrer au contact de la route et donc par définition sculptée.

Selon un autre mode préférentiel de l'invention, la sous-couche élastomère de protection est externe à la bande de roulement, disposée dans le sommet entre la bande de roulement et la ceinture.

Les pneumatiques de l'invention sont particulièrement destinés à équiper des véhicules à moteur de type tourisme, incluant les véhicules 4x4 (à quatre roues motrices) et véhicules SUV ("*Sport Utility Vehicles*"), des véhicules deux roues (notamment motos) comme des véhicules industriels choisis en particulier parmi camionnettes et "poids-lourd" (i.e., métro, bus, engins de transport routier tels que camions, tracteurs, remorques, véhicules hors-la-route tels qu'engins agricoles ou de génie civil).

L'invention concerne les pneumatiques ci-dessus tant à l'état cru (i.e., avant cuisson) qu'à l'état cuit (i.e., après réticulation ou vulcanisation).

L'invention concerne également l'utilisation comme couche barrière à eau, dans un article en caoutchouc, d'une composition élastomère dont la formulation est telle que définie ci-dessus.

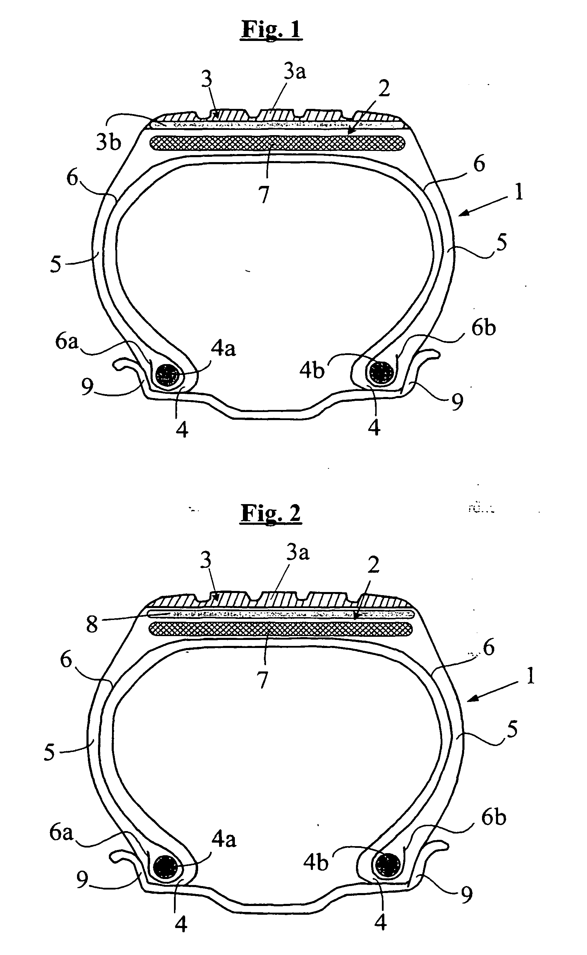

L'invention ainsi que ses avantages seront aisément compris à la lumière de la description et des exemples de réalisation qui suivent, ainsi que des figures 1 et 2 relatives à ces exemples qui schématisent, en coupe radiale, deux exemples de pneumatiques radiaux conformes à l'invention.

### I - DEFINITIONS

Dans la présente demande, on entend de manière connue par :
- "axiale", une direction parallèle à l'axe de rotation du pneumatique ; cette direction peut être "axialement intérieure" lorsqu'elle est dirigée vers l'intérieur du pneumatique et "axialement extérieure" lorsqu'elle est dirigée vers l'extérieur du pneumatique ;
- "bourrelet", la portion inextensible du pneumatique adjacente radialement intérieurement au flanc et dont la base est destinée à être montée sur un siège de jante d'une roue de véhicule ;
- "élastomère (ou indistinctement caoutchouc) diénique", un élastomère issu au moins en partie (c'est-à-dire un homopolymère ou un copolymère) de monomère(s) diène(s) (i.e., porteur(s) de deux doubles liaisons carbone-carbone, conjuguées ou non) ;
- "élastomère isoprénique", un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères ;
- "flanc", la portion du pneumatique, le plus souvent de faible rigidité de flexion, située entre le sommet et le bourrelet ;
- "module sécant en extension" (noté E10) : le module en traction mesuré en seconde élongation (i.e., après un cycle d'accommodation) à 10% d'allongement (selon ASTM D412 1998 ; éprouvette "C"), ce module étant le module sécant "vrai" c'est-à-dire ramené à la section réelle de l'éprouvette (conditions normales de température et d'hygrométrie selon la norme ASTM D 1349 de 1999) ;
- "pce" signifie parties en poids pour cent parties d'élastomère (du total des élastomères si plusieurs élastomères sont présents) ;
- "radiale", une direction passant par l'axe de rotation du pneumatique et normale à celui-ci ; cette direction peut être "radialement intérieure (ou interne)" ou "radialement extérieure (ou externe)" selon qu'elle se dirige vers l'axe de rotation du pneumatique ou vers l'extérieur du pneumatique ;
- "renfort" ou "élément de renforcement", aussi bien des monofilaments que des multifilaments, ou des assemblages comme des câbles, des retors ou bien encore n'importe quel type d'assemblage équivalent, et ceci, quels que soient la matière et le traitement de ces renforts, par exemple traitement de surface ou enrobage tel que gommage, ou encore pré-encollage pour favoriser l'adhésion sur le caoutchouc ;
- "renfort orienté circonférentiellement" ou "renfort circonférentiel", un renfort orienté sensiblement parallèlement à la direction circonférentielle du pneumatique, c'est-à-dire faisant avec cette direction un angle ne s'écartant pas de plus de cinq degrés de la direction circonférentielle ;
- "renfort orienté radialement" ou "renfort radial", un renfort contenu sensiblement dans un même plan axial ou dans un plan faisant avec un plan axial un angle inférieur ou égal à 10 degrés.

D'autre part, dans la présente description et sauf indication expresse différente, tous les pourcentages (%) indiqués sont des % en masse ; de même, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

### II - DESCRIPTION DETAILLEE DE L'INVENTION

Le pneumatique de l'invention a donc pour caractéristique essentielle d'être pourvu d'une sous-couche ou base comportant une composition de caoutchouc qui comporte au moins 50 à 100 pce d'un copolymère à base de styrène et de butadiène, une charge renforçante, et entre 10 et 150 pce d'une charge lamellaire, composants qui vont être décrits en détail ci-après.

### II-1. - Formulation de la sous-couche élastomère de protection

### II-1-A. Copolymère à base de styrène et de butadiène

La composition de caoutchouc formant la sous-couche élastomère de protection a pour première caractéristique essentielle de comporter de 50 à 100 pce d'un copolymère à base de styrène et de butadiène, c'est-à-dire d'un copolymère d'au moins un monomère styrène et d'au moins un monomère butadiène ; en d'autres termes, ledit copolymère à base de styrène et de butadiène comporte par définition au moins des unités issues de styrène et des unités issues de butadiène.

Préférentiellement, le taux dudit copolymère, dans la couche élastomère de protection, est compris dans un domaine de 50 à 90 pce, plus préférentiellement dans un domaine de 60 à 85 pce.

A titre de monomères butadiène conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène. A titre de monomères styrène conviennent notamment le styrène, les méthylstyrènes, le para-tertiobutylstyrène, les méthoxystyrènes, les chlorostyrènes.

Ledit copolymère à base de styrène et de butadiène peut avoir toute microstructure qui est fonction des conditions de polymérisation utilisées, notamment de la présence ou non d'un agent modifiant et/ou randomisant et des quantités d'agent modifiant et/ou randomisant employées. Il peut être par exemple à blocs, statistique, séquencé, microséquencé, et être préparé en dispersion ou en solution ; il peut être couplé et/ou étoilé ou encore fonctionnalisé avec un agent de couplage et/ou d'étoilage ou de fonctionnalisation.

De préférence, le copolymère à base de styrène et de butadiène est choisi dans le groupe constitué par les copolymères styrène-butadiène (en abrégé SBR), les copolymères styrène-butadiène-isoprène (en abrégé SBIR) et les mélanges de tels copolymères.

Parmi les copolymères SBIR, on peut citer notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%.

Plus préférentiellement, on utilise un copolymère SBR. Parmi les copolymères SBR, on peut citer notamment ceux ayant une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%.

De préférence, la température de transition vitreuse (ou "Tg") dudit copolymère à base de styrène et de butadiène est supérieure à -40°C, notamment comprise entre -40°C et 0°C ; plus préférentiellement encore elle est supérieure à -35°C, notamment entre -35°C et 0°C. Selon un mode de réalisation particulièrement préférentiel, la Tg dudit copolymère est comprise entre -30°C et 0°C (par exemple dans un domaine de -25°C à -5°C).

La Tg des élastomères ici décrits est mesurée de manière conventionnelle, bien connue de l'homme du métier, sur un élastomère à l'état sec (i.e., sans huile d'extension) et par DSC (par exemple selon ASTM D3418 - 1999).

L'homme du métier sait comment modifier la microstructure d'un copolymère à base de styrène et de butadiène, en particulier d'un SBR, pour augmenter et ajuster sa Tg, notamment en jouant sur les teneurs en styrène, en liaisons -1,2 ou encore en liaisons trans-1,4 de la partie butadiénique. On utilise plus préférentiellement un SBR (solution ou émulsion) ayant une teneur en styrène (% molaire) qui est supérieure à 35%, plus préférentiellement comprise entre 35% et 60%, en particulier dans un domaine de 38% à 50%. Des SBR à relative haute Tg sont bien connus de l'homme du métier, ils ont été notamment utilisés dans des bandes de roulement de pneumatiques pour améliorer certaines de leurs propriétés d'usage.

Au copolymère à base de styrène et de butadiène ci-dessus, peut être associé au moins un second élastomère diénique, différent dudit copolymère (c'est-à-dire ne comportant pas des unités issues de styrène et de butadiène), ledit second élastomère diénique étant présent à un taux pondéral qui est en conséquence au plus égal à 50 pce (pour rappel, pce signifiant parties en poids pour cent parties d'élastomère, c'est-à-dire du total des élastomères présents dans la couche élastomère de protection).

Ce second élastomère diénique éventuel est préférentiellement choisi dans le groupe constitué par les caoutchoucs naturels (NR), les polyisoprènes de synthèse (IR), les polybutadiènes (BR), les copolymères d'isoprène et les mélanges de ces élastomères. De tels copolymères sont plus préférentiellement choisis dans le groupe constitué par les copolymères d'isoprène-butadiène (BIR) et les copolymères d'isoprène-styrène (SIR).

Parmi ces derniers, conviennent notamment les homopolymères polybutadiène (BR) et en particulier ceux ayant une teneur (% molaire) en unités -1,2 comprise entre 4% et 80% ou ceux ayant une teneur (% molaire) en cis-1,4 supérieure à 80% ; les homopolymères polyisoprène (IR) ; les copolymères de butadiène-isoprène (BIR) et notamment ceux ayant une teneur en isoprène comprise entre 5% et 90% en poids et une Tg de - 40°C à - 80°C ; les copolymères isoprène-styrène (SIR) et notamment ceux ayant une teneur en styrène comprise entre 5% et 50% en poids et une Tg comprise entre - 25°C et - 50°C.

Selon un mode de réalisation préférentiel, le second élastomère diénique est un élastomère isoprénique, plus préférentiellement du caoutchouc naturel ou un polyisoprène de synthèse du type cis-1,4 ; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Plus préférentiellement, le taux de second élastomère diénique, en particulier d'élastomère isoprénique, notamment de caoutchouc naturel, est compris dans un domaine de 10 à 50 pce, plus préférentiellement encore dans un domaine de 15 à 40 pce.

Aux élastomères diéniques précédemment décrits pourraient être également associés, en quantité minoritaire, des élastomères synthétiques autre que diéniques, voire des polymères autres que des élastomères, par exemple des polymères thermoplastiques.

### II-1-B. Charge renforçante

On peut utiliser tout type de charge renforçante connue pour ses capacités à renforcer une composition de caoutchouc utilisable pour la fabrication de pneumatiques, par exemple une charge organique telle que du noir de carbone, ou encore une charge inorganique renforçante telle que de la silice à laquelle est associé de manière connue un agent de couplage.

Une telle charge renforçante consiste préférentiellement en des nanoparticules dont la taille moyenne (en masse) est inférieure à 500 nm, le plus souvent comprise entre 20 et 200 nm, en particulier et préférentiellement comprise entre 20 et 150 nm.

De manière préférentielle, le taux de charge renforçante totale (en particulier de la silice ou du noir de carbone ou un mélange de silice et de noir de carbone) est supérieur à 20 pce, notamment compris entre 20 et 100 pce. En dessous de 20 pce, la cohésion et les propriétés mécaniques de la sous-couche risquent d'être insuffisantes pour certaines applications, tandis qu'au-delà de 100 pce il existe un risque d'augmentation de l'hystérèse et donc de la résistance au roulement des pneumatiques. Pour ces raisons, le taux de charge renforçante totale est plus préférentiellement compris dans un domaine de 25 à 80 pce, en particulier de 30 à 70 pce.

Comme noirs de carbone conviennent tous les noirs de carbone conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou des noirs des séries 600 ou 700 (grades ASTM), comme par exemple les noirs N115, N134, N234, N326, N330, N339, N347, N375, N683, N772. Les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu ici toute charge inorganique ou minérale, quelles que soient sa couleur et son origine (naturelle ou de synthèse), encore appelée charge "blanche", charge "claire" ou parfois charge "non-noire" par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, en particulier de la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:
(I) Z-A-Sₓ-A-Z , dans laquelle:
   - x est un entier de 2 à 8 (de préférence de 2 à 5) ;
   - les symboles A, identiques ou différents, représentent un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
   - les symboles Z, identiques ou différents, répondent à l'une des formules ci-après: 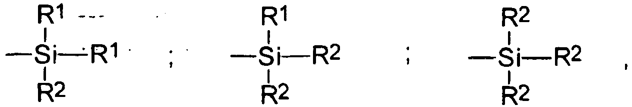
   dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², -substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

A titre d'exemples de silanes polysulfurés, on citera plus particulièrement les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, ou le disulfure de bis-(triéthoxysilylpropyle), en abrégé TESPD. On citera également à titre d'exemples préférentiels les polysulfures (notamment disulfures, trisulfures ou tétrasulfures) de bis-(monoalkoxyl(C₁-C₄)-dialkyl(C₁-C₄)Silylpropyl), plus particulièrement le tétrasulfure de bis-monoéthoxydiméthylsilylpropyl tel que décrit dans la demande de brevet WO 02/083782 (ou US 7,217,751).

A titre d'agent de couplage autre qu'alkoxysilane polysulfuré, on citera notamment des POS (polyorganosiloxanes) bifonctionnels ou encore des polysulfures d'hydroxysilane (R² = OH dans la formule (I) ci-dessus) tels que décrits par exemple dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes WO 2006/125532, WO 2006/125533 ou WO 2006/125534.

Dans la sous-couche de protection, lorsqu'elle est renforcée par une charge inorganique telle que silice, la teneur en agent de couplage est préférentiellement comprise entre 2 et 12 pce, plus préférentiellement entre 3 et 8 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment-hydroxyles, nécessitant l'utilisation d'un agent de couplage pour établir la liaison entre la charge et l'élastomère.

### II-1-C. Charge lamellaire.

La sous-couche du pneumatique de l'invention a pour autre caractéristique essentielle de comporter entre 10 et 150 pce d'une charge lamellaire.

En dessous du minimum indiqué, l'effet technique visé est insuffisant alors qu'au-delà du maximum préconisé, on s'expose à des problèmes rédhibitoires d'augmentation du module, de fragilisation de la composition, aussi à des difficultés de dispersion de la charge et de processabilité, sans parler d'une pénalisation notable de l'hystérèse. Pour toutes les raisons indiquées ci-dessus, on utilise un taux de charge lamellaire préférentiellement compris entre 20 et 100 pce, plus préférentiellement encore compris dans un domaine de 25 à 80 pce.

D'autre part, pour une performance optimale, exprimé cette fois en volume et non plus en poids, le taux de charge lamellaire est préférentiellement inférieur à 30%, plus préférentiellement inférieur à 25%, en particulier inférieur à 20% (% en volume de composition élastomère ou sous-couche élastomère de protection).

Les charges dites lamellaires (en anglais "*platy fillers*") sont bien connues de l'homme du métier. Elles ont été notamment utilisées dans des bandages pneumatiques pour réduire la perméabilité des couches étanches aux gaz ("*inner-liners*") conventionnelles à base de caoutchouc butyl. Dans ces couches à base de butyl, elles sont généralement utilisées à des taux relativement faibles, n'excédant pas le plus souvent 10 à 25 pce (voir par exemple les documents brevet US 2004/0194863, WO 2006/047509).

Elles se présentent généralement sous forme de plaques, plaquettes, feuilles ou feuillets empilés, avec une anisométrie plus ou moins marquée des ces particules. Leur rapport de forme (F = L/E) (ou "aspect ratio") est généralement supérieur à 2, plus souvent supérieur à 3 ou à 5, L représentant la longueur (ou plus grande dimension) médiane et E l'épaisseur médiane de ces charges lamellaires, ces moyennes étant calculées en nombre. Préférentiellement, ce rapport de forme est compris entre 2 et 200, notamment entre 3 et 150, plus préférentiellement encore compris dans un domaine de 5 à 100, en particulier de 5 à 50.

Ces charges lamellaires sont préférentiellement de taille micrométrique, c'est-à-dire qu'elles se présentent sous la forme de microparticules dont la taille ou longueur médiane (L) est supérieure à 1 µm, typiquement comprise entre quelques µm (par exemple 5 ou 10 µm) et quelques centaines de µm (par exemple 500 voire 800 µm). Selon un mode préférentiel, la longueur médiane (L) des particules est comprise entre 5 et 500 µm, plus préférentiellement comprise entre 50 et 250 µm. Selon un autre mode préférentiel, l'épaisseur médiane (E) des particules est quant à elle comprise entre 0,5 et 50 µm, notamment entre 2 et 30 µm.

Préférentiellement, les charges lamellaires utilisées conformément à l'invention sont choisies dans le groupe constitué par les graphites, les phyllosilicates et les mélanges de telles charges. Parmi les phyllosilicates, on citera notamment les argiles, talcs, micas, kaolins, ces phyllosilicates pouvant être modifiés ou non par exemple par un traitement de surface ; à titre d'exemples de tels phyllosilicates modifiés, on peut citer notamment des micas recouverts d'oxyde de titane, des argiles modifiées par des tensioactifs ("*organo clays*").

On utilise préférentiellement des charges lamellaires à faible énergie de surface, c'est-à-dire relativement apolaires, telles que celles choisies dans le groupe constitué par les graphites, les talcs, les micas et les mélanges de telles charges, ces dernières pouvant être modifiées ou non, plus préférentiellement encore dans le groupe constitué par les graphites, les talcs et les mélanges de telles charges. Parmi les graphites peuvent être utilisés les graphites naturels comme les graphites synthétiques.

Comme exemples de micas, on peut citer les micas commercialisés par la société CMMP (Mica-MU®, Mica-Soft®, Briomica® par exemple), les vermiculites (notamment la vermiculite Shawatec® commercialisée par CMMP ou la vermiculite Microlite® commercialisée par W.R.Grace), les micas modifiés ou traités (par exemple, la gamme Iriodin® commercialisée par Merck). Comme exemples de graphites, on peut citer les graphites commercialisés par la société Timcal (gamme Timrex®). Comme exemple de talcs, on peut citer les talcs commercialisés par la société Luzenac.

L'introduction des charges lamellaires dans la composition élastomère peut être réalisée selon divers procédés connus, par exemple par mélangeage en solution, par mélangeage en masse dans un mélangeur interne, ou encore par mélangeage par extrusion.

Pour l'analyse de la granulométrie et le calcul de la taille médiane des (micro)particules de charge lamellaire, différentes méthodes connues sont applicables, par exemple par diffraction laser (voir par exemple norme ISO-8130-13 ou norme JIS K5600-9-3).

On peut aussi utiliser, de manière simple et préférentielle, une analyse de la granulométrie par un tamisage mécanique ; l'opération consiste à tamiser une quantité définie d'échantillon (par exemple 200 g) sur une table vibrante pendant 30 min avec des diamètres de tamis différents (par exemple, selon une raison de progression, avec des mailles (en µm) de 75, 105, 150, 180, etc.) ; les refus récoltés sur chaque tamis sont pesés sur une balance de précision ; on en déduit le % de refus pour chaque diamètre de maille par rapport au poids total de produit ; la taille médiane (ou diamètre médian) est finalement calculée de manière connue à partir de l'histogramme de la distribution granulométrique.

### II-1-D. Additifs divers

La composition élastomère de la sous-couche élastomère de protection peut comporter également tout ou partie des additifs usuels habituellement utilisés dans les compositions de caoutchouc pour pneumatiques, notamment celles destinées à la fabrication de base ("*tread base*") de bandes de roulement à structure "cap-base", comme par exemple des agents de protection tels que anti-ozonants chimiques, anti-oxydants, des agents plastifiants ou des huiles d'extension, que ces derniers soient de nature aromatique ou non-aromatique, notamment des huiles très faiblement ou non aromatiques, par exemple du type naphténiques ou paraffiniques, à haute ou de préférence à basse viscosité, des huiles MES ou TDAE, des résines plastifiantes hydrocarbonées à haute Tg, des résines tackifiantes, des résines renforçantes, des accepteurs ou des donneurs de méthylène, un système de réticulation à base soit de soufre, soit de donneurs de soufre et/ou de peroxyde et/ou de bismaléimides, des accélérateurs de vulcanisation, des activateurs de vulcanisation.

En particulier, il s'est avéré que des résines plastifiantes hydrocarbonées à haute Tg, de préférence supérieure à 20°C, plus préférentiellement supérieure à 30°C (selon ASTM D3418 de 1999), sont avantageusement utilisables car elles peuvent permettre d'améliorer encore l'effet technique de "barrière à eau" procuré par la sous-couche élastomère de protection précédemment décrite.

Les résines hydrocarbonées (on rappelle que l'appellation "résine" est réservée par définition à un composé solide à 23°C) sont des polymères bien connus de l'homme du métier, utilisables en particulier comme agents plastifiants ou agents tackifiants dans des matrices polymériques. Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "*Rubber Tires and Mechanical Goods*"). Elles peuvent être aliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

De préférence, leur masse moléculaire moyenne en nombre (Mn) est comprise entre 400 et 2000 g/mol, notamment entre 500 et 1500 g/mol ; leur indice de polymolécularité (Ip) est préférentiellement inférieur à 3, notamment inférieur à 2 (rappel : Ip = Mw/Mn avec Mw masse moléculaire moyenne en poids). La macrostructure (Mw, Mn et Ip) de la résine hydrocarbonée est déterminée par chromatographie d'exclusion stérique ("SEC"): solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

A titre d'exemples de résines plastifiantes hydrocarbonées ci-dessus, on citera notamment les résines d'homopolymères ou copolymères de cyclopentadiène ou dicyclopentadiène, les résines d'homopolymères ou copolymères terpène (e.g. alphapinène, betapinène, dipentène ou polylimonène), les résines d'homopolymères ou copolymères de coupe C5 ou de coupe C9, par exemple de copolymère coupe C5/styrène ou de copolymère coupe C5/coupe C9.

Le taux de résine hydrocarbonée est préférentiellement compris entre 5 et 60 pce, notamment entre 5 et 50 pce, plus préférentiellement encore compris dans un domaine de 10 à 40 pce.

Les compositions de la sous-couche élastomère de protection peuvent également contenir des activateurs de couplage lorsque qu'un agent de couplage est utilisé, des agents de recouvrement de la charge inorganique lorsqu'une charge inorganique est utilisée, ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de processabilité à l'état cru ; ces agents sont par exemple des hydroxysilanes ou des silanes hydrolysables tels que des alkyl-alkoxysilanes, des polyols, des polyéthers, des amines, des polyorganosiloxanes hydroxylés ou hydrolysables.

### II-2. - Fabrication des compositions

Les compositions de caoutchouc formant la sous-couche élastomère de protection sont fabriquées dans des mélangeurs appropriés, en utilisant par exemple deux phases de préparation successives selon une procédure générale bien connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Un procédé utilisable pour la fabrication de telles compositions de caoutchouc comporte par exemple et de préférence les étapes suivantes :
- incorporer dans un mélangeur, aux 50 à 100 pce du copolymère à base de styrène et de butadiène, la charge renforçante et entre 10 et 150 pce de la charge lamellaire, en malaxant thermomécaniquement le tout, en une ou plusieurs fois, jusqu'à atteindre une température maximale comprise entre 130°C et 200°C ;
- refroidir l'ensemble à une température inférieure à 100°C ;
- incorporer ensuite un système de réticulation ;
- malaxer le tout jusqu'à une température maximale inférieure à 120°C ;
- extruder ou calandrer la composition de caoutchouc ainsi obtenue.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de réticulation. Après refroidissement du mélange ainsi obtenu au cours de la première phase non-productive, on incorpore alors le système de réticulation à basse température, généralement dans un mélangeur externe tel qu'un mélangeur à cylindres ; le tout est alors mélangé (phase productive) pendant quelques minutes, par exemple entre 5 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productive et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 5 pce, celui de l'accélérateur primaire est de préférence compris entre 0,5 et 8 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont plus préférentiellement choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable directement comme sous-couche, par exemple comme partie "*base*" d'une bande de roulement à structure "*cap*-*base*".

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

De préférence, la sous-couche élastomère de protection présente, à l'état vulcanisé (i.e., après cuisson), un module sécant en extension E10 qui est inférieur à 30 MPa, plus préférentiellement compris entre 5 et 25 MPa, en particulier compris entre 10 et 20 MPa.

### II-3. - Pneumatique de l'invention

La composition de caoutchouc précédemment décrite est donc utilisée, dans le pneumatique de l'invention, comme sous-couche élastomère de protection disposée circonférentiellement à l'intérieur du sommet du pneumatique, entre d'une part la partie la plus radialement externe de sa bande de roulement, c'est-à-dire la portion destinée à entrer au contact de la route lors du roulage, et d'autre part la ceinture renforçant ledit sommet.

Il faut donc comprendre que cette sous-couche de protection est disposée :
- soit sous la bande de roulement (c'est-à-dire radialement intérieurement par rapport à cette bande de roulement), entre la bande de roulement et la ceinture ;
- soit dans la bande de roulement elle-même, mais dans ce cas sous la portion (c'est-à-dire radialement intérieurement par rapport à cette portion) de bande de roulement qui est destinée à entrer au contact de la route lors du roulage du pneumatique, tout au long de la durée de vie de ce dernier.

On peut rappeler aussi que, dans le second cas, la bande de roulement est communément appelée par l'homme du métier bande de roulement à structure "*cap*-*base*" ; le terme "*cap*" désigne la portion sculptée de la bande de roulement destinée à entrer au contact de la route et le terme "*base*" désigne la portion non sculptée de la bande de roulement, de formulation différente, qui n'est pas destinée à entrer au contact de la route.

L'épaisseur de cette couche élastomère de protection est de préférence comprise entre 0,1 et 2 mm, notamment dans un domaine de 0,2 à 1,5 mm.
Les figures 1 et 2 annexées représentent en coupe radiale, de manière très schématique (notamment sans respect d'une échelle spécifique), deux exemples préférentiels de bandages pneumatiques pour véhicule automobile à armature de carcasse radiale, conformes à l'invention.

La figure 1 illustre un premier mode possible de réalisation de l'invention, selon lequel la sous-couche élastomère de protection (3b) est intégrée à la bande de roulement (3) elle-même, et disposée sous la portion (3a) de la bande de roulement (3) qui est destinée à entrer au contact de la route lors du roulage.

Sur cette figure 1, le bandage pneumatique (1) schématisé comporte un sommet (2) surmonté d'une bande de roulement (3) (pour simplifier, comportant une sculpture très simple) dont la partie radialement externe (3a) est destinée à entrer au contact de la route, deux bourrelets inextensibles (4) dans lesquels est ancrée une armature de carcasse (6). Le sommet (2), réuni auxdits bourrelets (4) par deux flancs (5), est de manière connue en soi renforcé par une armature de sommet ou "ceinture" (7) au moins en partie métallique et radialement externe par rapport à l'armature de carcasse (6), constituée par exemple d'au moins deux nappes croisées superposées renforcées par des câbles métalliques.

L'armature de carcasse (6) est ici ancrée dans chaque bourrelet (4) par enroulement autour de deux tringles (4a, 4b), le retournement (6a, 6b) de cette armature (6) étant par exemple disposé vers l'extérieur du pneumatique (1) qui est ici représenté monté sur sa jante (9). L'armature de carcasse (6) est constituée d'au moins une nappe renforcée par des câbles textiles radiaux, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 7). Bien entendu, ce pneumatique (1) comporte en outre de manière connue une couche de gomme ou élastomère intérieure (communément appelée " gomme intérieure " ou " *inner liner* ") qui définit la face radialement interne du pneumatique et qui est destinée à protéger la nappe de carcasse de la diffusion d'air provenant de l'espace intérieur au pneumatique.

Ce pneumatique (1) conforme à l'invention est caractérisé en ce que la partie base (3b) de sa bande de roulement (3) est constituée par la sous-couche qui a été décrite en détail précédemment.

La figure 2 illustre un autre mode possible de réalisation de l'invention, selon lequel la sous-couche élastomère de protection (8) est externe à la bande de roulement (i.e., distincte de cette dernière), disposée cette fois dans le sommet (2) en dessous de la bande de roulement (i.e., radialement intérieurement par rapport à cette dernière) et au-dessus de la ceinture (i.e., radialement extérieurement par rapport à cette dernière), en d'autres termes entre la bande de roulement (3) et la ceinture (7).

Dans les deux cas schématisés ci-dessus, la sous-couche élastomère de protection, grâce à ses propriétés de barrière à eau améliorées, confère aux pneumatiques de l'invention une protection efficace contre les effets parasites de l'eau pouvant pénétrer à travers leur bande de roulement, et diffuser vers leur ceinture, comme cela est démontré dans les tests de caoutchouterie qui suivent.

### II-4. - Tests de caoutchouterie

Pour les besoins de cet essai, une composition de caoutchouc (notée ci-après C-1) a été préparée dont la formulation est donnée dans le tableau 1, le taux des différents produits étant exprimés en pce (parties en poids pour cent parties d'élastomère, constitué ici de SBR et NR).

Pour la fabrication de cette composition, on a procédé de la manière suivante: on a introduit dans un mélangeur interne, dont la température initiale de cuve était d'environ 60°C, successivement la charge renforçante (noir de carbone), la charge lamellaire (comportant des particules de graphite), le SBR et le second élastomère diénique (caoutchouc naturel), ainsi que les divers autres ingrédients à l'exception du système de vulcanisation ; le mélangeur était ainsi rempli à environ 70% (% en volume). On a conduit alors un travail thermomécanique (phase non-productive) en une étape d'environ 2 à 4 min, jusqu'à atteindre une température maximale de "tombée" de 165°C. On a récupéré le mélange ainsi obtenu, on l'a refroidit puis on a incorporé du soufre et un accélérateur type sulfénamide sur un mélangeur externe (homo-finisseur) à 30°C, en mélangeant le tout (phase productive) pendant quelques minutes. La composition ainsi obtenue a été ensuite calandrée sous la forme de plaques (épaisseur égale à 1 mm) utilisables comme base (sous-couche) d'une bande de roulement de pneumatique.

Cette composition C-1 a été comparée à une composition usuelle (notée ci-après C-2, utilisant un mélange d'élastomères BR et NR) pour sous-couche ou base d'une bande de roulement du type "*cap*-*base*". La composition C-2, préparée de la même manière que la composition C-1, se distinguait de la composition C-1 par l'emploi d'un élastomère polybutadiène (BR), en lieu et place de l'élastomère SBR, et par l'absence de charge lamellaire.

Pour caractériser les propriétés de barrière à eau de ces deux compositions, on a réalisé le test simple qui suit : un "skim" (couche d'épaisseur égale à environ 2 mm) de composition de caoutchouc dite réceptrice (ci-après notée C-3), de dimensions 150 mm par 150 mm, a été disposé "en sandwich" entre deux skims (couches d'épaisseur égale à environ 1 mm) des compositions "barrière" à tester (C-1 ou C-2), dans un moule aux dimensions appropriées. L'ensemble final ainsi moulé constituait un bloc de caoutchouc sous forme d'un parallélépipède de dimensions 150 mm par 150 mm et d'épaisseur totale égale à 4 mm. La composition C-3 utilisée était une composition de caoutchouc connue, conventionnellement utilisée pour le calandrage de nappes métalliques de ceinture de pneumatique, à base de caoutchouc naturel (peptisé) et de noir de carbone N326 (55 pce).

Après cuisson (vulcanisation) de plusieurs blocs de caoutchouc ainsi préparés, pendant 30 min à 150°C et sous une pression de 15 bar (piston rectangulaire de 150 x 150 mm), ces derniers ont été démoulés pour être enfin soumis à une série de traitements thermiques et humides, à 55°C et sous une humidité relative de 95%, d'une durée maximale de 2 semaines. Après traitement, des échantillons des compositions réceptrices C-3 ont été extraits du centre des blocs de caoutchouc par décorticage, leur teneur (% en poids de composition réceptrice) en eau a été déterminée par une titration Karl-Fischer et comparée à la teneur initiale avant traitement (soit environ 0,5%, quelle que soit la composition barrière testée).

Les résultats donnés dans le tableau 2 expriment la prise d'eau c'est-à-dire l'augmentation de la teneur en eau observée dans la composition réceptrice C-3, pour les deux compositions barrière (C-1 ou C-2) testées dans lesquelles la composition réceptrice a été moulée. Une prise d'eau de +2,0 % exprimée par exemple pour la composition barrière C-2 après un traitement de 14 jours signifie que la quantité d'eau (% en poids de composition réceptrice) présente dans la composition réceptrice C-3 est passée de 0,5% (état initial) à 2,5% (état final) après traitement.

Après traitement humide et thermique, on constate que la composition barrière C-1, utilisable comme sous-couche élastomère de protection dans le pneumatique de l'invention, présente une propriété de barrière à l'eau qui est très nettement améliorée par rapport à la composition C-2 de l'art antérieur : avec cette composition barrière C-1, quelle que soit la durée du traitement, l'augmentation de la quantité d'eau (parasite) recueillie dans la composition C-3 après traitement thermique et humide, est environ deux fois plus faible comparativement à la composition C-2 conventionnelle.

En conclusion, la sous-couche élastomère du pneumatique radial de l'invention possède d'excellentes propriétés de barrière à eau, conférant au pneumatique et à sa ceinture une protection nettement améliorée contre les risques de pénétration d'eau à travers la bande de roulement.

**Tableau 1**

| Formulation : | pce |
|---|---|
| SBR (1) | 80 |
| NR (2) | 20 |
| noir de carbone (3) | 50 |
| charge lamellaire (4) | 30 |
| ZnO | 3 |
| acide stéarique | 1 |
| antioxydant (5) | 2 |
| soufre | 3 |
| accélérateur (6) | 1.5 |

| | |
|---|---|
| (1) SBR solution comportant 41% de motifs styrène et 59% de motifs butadiène ; avec, pour la partie butadiénique, 24% dé motifs 1-2, 50% de motifs 1-4 trans et 26% de motifs 1-4 cis (Tg = -28°C) ; (2) caoutchouc naturel (peptisé) ; (3) grade ASTM N550 (société Cabot) ; (4) particules de graphite (Timrex^{®} 80X150 mesh - société Timcal) ; (5) N-1,3-diméthylbutyl-N-phénylparaphénylènediamine (Santoflex 6-PPD de la société Flexsys); (6) N-dicyclohexyl-2-benzothiazol-sulfénamide ("Santocure CBS" de la société Flexsys). | |

**Tableau 2**

| Prise d'eau (% en poids) de la composition réceptrice (C-3) | Invention (barrière C-1) | Témoin (barrière C-2) |
|---|---|---|
| après traitement de 5 jours | + 0.55 | + 1.15 |
| après traitement de 10 jours | + 0.90 | + 1.70 |
| après traitement de 14 jours | +1.10 | + 2.00 |

## Revendications

1. Pneumatique radial (1) pour véhicule automobile, comportant :
○ un sommet (2) surmonté d'une bande de roulement (3) pourvue d'au moins une partie (3a) radialement externe destinée à entrer au contact de la route ;
○ deux bourrelets inextensibles (4), deux flancs (5) reliant les bourrelets (4) à la bande de roulement (3), une armature de carcasse (6) passant dans les deux flancs (5) et ancrée dans les bourrelets (4) ;
○ le sommet (2) étant renforcé par une armature de sommet ou ceinture (7) disposée circonférentiellement entre l'armature de carcasse (6) et la bande de roulement (3) ;
○ une couche élastomère radialement interne (3b, 8) dite « sous-couche », de formulation différente de la formulation de la couche élastomère radialement externe (3a), cette sous-couche étant disposée entre la couche radialement externe (3a) de la bande de roulement (3) et la ceinture (7),
**caractérisé en ce que** ladite sous-couche comporte 50 à 100 pce d'un copolymère à base de styrène et de butadiène, une charge renforçante et entre 10 et 150 pce d'une charge lamellaire.

2. Pneumatique selon la revendication 1, dans lequel ledit copolymère est choisi dans le groupe constitué par les copolymères styrène-butadiène, les copolymères styrène-butadiène-isoprène et les mélanges de tels copolymères.

3. Pneumatique selon la revendication 2, dans lequel ledit copolymère est un copolymère styrène-butadiène.

4. Pneumatique selon l'une quelconque des revendications 1 à 3, dans lequel ledit copolymère présente une température de transition vitreuse qui est supérieure à -40°C, de préférence supérieure à -35°C.

5. Pneumatique selon la revendication 4, dans lequel la température de transition vitreuse dudit copolymère est comprise entre -30°C et 0°C.

6. Pneumatique selon l'une quelconque des revendications 1 à 5, dans lequel ledit copolymère à base de styrène et de butadiène est utilisé en mélange avec un second élastomère diénique, différent dudit copolymère à base de styrène et de butadiène.

7. Pneumatique selon la revendication 6, dans lequel le second élastomère diénique est choisi dans le groupe constitué par les caoutchoucs naturels, les polyisoprènes de synthèse, les polybutadiènes, les copolymères d'isoprène et les mélanges de ces élastomères.

8. Pneumatique selon la revendication 7, dans lequel le second élastomère diénique est un élastomère isoprénique, de préférence du caoutchouc naturel.

9. Pneumatique selon l'une quelconque des revendications 1 à 8, dans lequel le taux dudit copolymère dans la sous-couche est compris dans un domaine de 50 à 90 pce, de préférence dans un domaine de 60 à 85 pce.

10. Pneumatique selon l'une quelconque des revendications 1 à 9, dans lequel le taux de second élastomère diénique dans la sous-couche est compris dans un domaine de 10 à 50 pce, de préférence dans un domaine de 15 à 40 pce.

11. Pneumatique selon l'une quelconque des revendications 1 à 10, dans lequel le taux de charge renforçante dans la sous-couche est supérieur à 20 pce, de préférence compris dans un domaine de 30 à 70 pce.

12. Pneumatique selon l'une quelconque des revendications 1 à 11, dans lequel la charge renforçante comporte de la silice ou du noir de carbone ou un mélange de silice et de noir de carbone.

13. Pneumatique selon l'une quelconque des revendications 1 à 12, dans lequel le taux de charge lamellaire dans la sous-couche est compris entre 20 et 100 pce, de préférence dans un domaine de 25 à 80 pce.

14. Pneumatique selon l'une quelconque des revendications 1 à 13, dans lequel la charge lamellaire est choisie dans le groupe constitué par les graphites, les talcs, les micas et les mélanges de telles charges, de préférence comporte des particules de graphite.

15. Utilisation comme couche barrière à eau, dans un article en caoutchouc, d'une sous-couche élastomère dont la formulation est telle que définie dans l'une quelconque des revendications 1 à 14.

## Patentansprüche

1. Radialreifen (1) für ein Kraftfahrzeug, der aufweist:
o einen Scheitel (2), überlagert von einem Laufstreifen (3), der mit mindestens einem radial äußeren Bereich (3a) versehen ist, welcher dazu bestimmt ist, mit der Straße in Kontakt zu kommen;
o zwei nicht dehnbare Wülste (4), zwei Flanken (5), die die Wülste (4) mit dem Laufstreifen (3) verbinden, eine Karkassenbewehrung (6), die durch die zwei Flanken (5) geht und in den Wülsten (4) verankert ist;
o wobei der Scheitel (2) durch eine Scheitelbewehrung oder Gürtel (7) verstärkt ist, die in Umfangsrichtung zwischen der Karkassenbewehrung (6) und dem Laufstreifen (3) angeordnet ist;
o eine radial innere Elastomerschicht (3b, 8), «Unterschicht» genannt, einer anderen Formel als die Formel der radial äußeren Elastomerschicht (3a), wobei diese Unterschicht zwischen der radial äußeren Schicht (3a) des Laufstreifens (3) und dem Gürtel (7) angeordnet ist,
**dadurch gekennzeichnet, dass** die Unterschicht 50 bis 100 pce eines Copolymers auf der Basis von Styrol und Butadien, einen Verstärkungsfüllstoff und zwischen 10 und 150 pce eines lamellaren Füllstoffs enthält.

2. Reifen nach Anspruch 1, wobei das Copolymer aus der Gruppe ausgewählt wird, die aus den Styrol-Butadien-Copolymeren, den Styrol-Butadien-Isopren-Copolymeren und den Mischungen solcher Copolymere besteht.

3. Reifen nach Anspruch 2, wobei das Copolymer ein Styrol-Butadien-Copolymer ist.

4. Reifen nach einem der Ansprüche 1 bis 3, wobei das Copolymer eine Glasübergangstemperatur hat, die höher als -40°C, vorzugsweise höher als -35°C ist.

5. Reifen nach Anspruch 4, wobei die Glasübergangstemperatur des Copolymers zwischen -30°C und 0°C liegt.

6. Reifen nach einem der Ansprüche 1 bis 5, wobei das Copolymer auf der Basis von Styrol und Butadien in einer Mischung mit einem zweiten Dienelastomer verwendet wird, das sich von dem Copolymer auf der Basis von Styrol und Butadien unterscheidet.

7. Reifen nach Anspruch 6, wobei das zweite Dienelastomer aus der Gruppe ausgewählt wird, die aus den natürlichen Kautschuken, den synthetischen Polyisoprenen, den Polybutadienen, den Isopren-Copolymeren und den Mischungen dieser Elastomere besteht.

8. Reifen nach Anspruch 7, wobei das zweite Dienelastomer ein Isoprenelastomer ist, vorzugsweise natürlicher Kautschuk.

9. Reifen nach einem der Ansprüche 1 bis 8, wobei der Anteil des Copolymers in der Unterschicht in einem Bereich von 50 bis 90 pce, vorzugsweise in einem Bereich von 60 bis 85 pce, liegt.

10. Reifen nach einem der Ansprüche 1 bis 9, wobei der Anteil des zweiten Dienelastomers in der Unterschicht in einem Bereich von 10 bis 50 pce, vorzugsweise in einem Bereich von 15 bis 40 pce, liegt.

11. Reifen nach einem der Ansprüche 1 bis 10, wobei der Anteil an Verstärkungsfüllstoff in der Unterschicht höher als 20 pce ist, vorzugsweise in einem Bereich von 30 bis 70 pce liegt.

12. Reifen nach einem der Ansprüche 1 bis 11, wobei der Verstärkungsfüllstoff Siliciumdioxid oder Russ oder eine Mischung von Siliciumdioxid und Russ aufweist.

13. Reifen nach einem der Ansprüche 1 bis 12, wobei der Anteil an lamellarem Füllstoff in der Unterschicht zwischen 20 und 100 pce liegt, vorzugsweise in einem Bereich von 25 bis 80 pce.

14. Reifen nach einem der Ansprüche 1 bis 13, wobei der lamellare Füllstoff aus der Gruppe ausgewählt wird, die aus den Graphiten, Talk, Glimmer und den Mischungen solcher Füllstoffe besteht, vorzugsweise Graphitteilchen aufweist.

15. Verwendung einer Elastomer-Unterschicht, deren Formel wie in einem der Ansprüche 1 bis 14 definiert ist, als Wasserbarriere in einem Gegenstand aus Kautschuk.

## Claims

1. Radial tyre (1) for motor vehicle, comprising:
o a crown (2) surmounted by a tread (3) provided with at least one radially outer part (3a) intended to come into contact with the road;
o two inextensible beads (4), two sidewalls (5) connecting the beads (4) to the tread (3), a carcass reinforcement (6) passing into the two sidewalls (5) and anchored in the beads (4);
o the crown (2) being reinforced by a crown reinforcement or belt (7) placed circumferentially between the carcass reinforcement (6) and the tread (3);
o a radially inner elastomer layer (3b, 8) named "underlayer"underlayer, having a formulation different from the formulation of the radially outer elastomer layer (3a), this underlayer being placed between the radially outer layer (3a) of the tread (3) and the belt (7),
**characterized in that** said underlayer comprises 50 to 100 phr of a copolymer based on styrene and on butadiene, a reinforcing filler and between 10 and 150 phr of a platy filler.

2. Tyre according to Claim 1, wherein said copolymer is chosen from the group consisting of styrene-butadiene copolymers, styrene-butadiene-isoprene copolymers and blends of such copolymers.

3. Tyre according to Claim 2, wherein said copolymer is a styrene-butadiene copolymer.

4. Tyre according to any one of Claims 1 to 3, wherein said copolymer has a glass transition temperature which is above -40°C, preferably above -35°C.

5. Tyre according to Claim 4, wherein the glass transition temperature of said copolymer is between -30°C and 0°C.

6. Tyre according to any one of Claims 1 to 5, wherein said copolymer based on styrene and on butadiene is used as a blend with a second diene elastomer, different from said copolymer based on styrene and on butadiene.

7. Tyre according to claim 6, wherein the second diene elastomer is chosen from the group consisting of natural rubbers, synthetic polyisoprenes, polybutadienes, isoprene copolymers and blends of these elastomers.

8. Tyre according to Claim 7, wherein the second diene elastomer is an isoprene elastomer, preferably natural rubber.

9. Tyre according to any one of Claims 1 to 8, wherein the content of said copolymer in the underlayer is within a range from 50 to 90 phr, preferably within a range from 60 to 85 phr.

10. Tyre according to any one of Claims 1 to 9, wherein the content of second diene elastomer in the underlayer is within a range from 10 to 50 phr, preferably within a range from 15 to 40 phr.

11. Tyre according to any one of Claims 1 to 10, wherein the content of reinforcing filler in the underlayer is greater than 20 phr, preferably within a range from 30 to 70 phr.

12. Tyre according to any one of Claims 1 to 11, wherein the reinforcing filler comprises silica or carbon black or a mixture of silica and carbon black.

13. Tyre according to any one of Claims 1 to 12, wherein the content of platy filler in the underlayer is between 20 and 100 phr, preferably within a range from 25 to 80 phr.

14. Tyre according to any one of Claims 1 to 13, wherein the platy filler is chosen from the group consisting of graphites, talcs, micas and mixtures of such fillers, preferably comprise graphite particles.

15. Use as a water-barrier layer, in a rubber article, of an elastomer layer of which the formulation is as defined in any one of Claims 1 to 14.
